Europäisches Patentamt

European Patent Office

Office européen des brevets

(19)

(11) Veröffentlichungsnummer: **0 249 863 B1**

# (12) EUROPÄISCHE PATENTSCHRIFT

(45) Veröffentlichungstag der Patentschrift: **09.09.92**

(21) Anmeldenummer: **87108350.7**

(22) Anmeldetag: **10.06.87**

(51) Int. Cl.5: **A23L 1/305**, A23L 1/237, A23J 3/00, A23L 1/227

(54) **Verfahren zum Reduzieren der Kochsalzmenge in einem Nahrungsmittel.**

(30) Priorität: **14.06.86 DE 3620150**

(43) Veröffentlichungstag der Anmeldung:
**23.12.87 Patentblatt 87/52**

(45) Bekanntmachung des Hinweises auf die Patenterteilung:
**09.09.92 Patentblatt 92/37**

(84) Benannte Vertragsstaaten:
**AT BE CH DE FR GB IT LI LU SE**

(56) Entgegenhaltungen:
**WO-A-85/00958**
**US-A- 2 331 598**
**US-A- 3 770 463**
**US-A- 4 130 555**
**US-A- 4 451 494**

(73) Patentinhaber: **Deutsche Gelatine-Fabriken Stoess AG**
**Postfach 100 Gammelsbacher Strasse 2**
**W-6930 Eberbach(DE)**

(72) Erfinder: **Marggrander, Kurt**
**Sandweg 8**
**W-6930 Eberbach-Igelsbach(DE)**
Erfinder: **Koepff, Peter, Dr.**
**Bergstrasse 142**
**W-6900 Heidelberg(DE)**
Erfinder: **Bräumer, Klaus, Dr.**
**Allensteiner Strasse 6**
**W-6930 Eberbach(DE)**

(74) Vertreter: **Hoeger, Stellrecht & Partner**
**Uhlandstrasse 14 c**
**W-7000 Stuttgart 1(DE)**

EP 0 249 863 B1

## Beschreibung

Die Erfindung betrifft ganz allgemein die Zubereitung einer salzarmen Kost. Insbesondere hat es die Erfindung mit einem Verfahren zur Reduzierung der Kochsalzmenge in einem Nahrungsmittel zu tun sowie mit einem hierdurch hergestellten Nahrungsmittel mit einem Gehalt an Kochsalz und hierdurch bestimmtem Geschmackseindruck. Schließlich bezieht sich die Erfindung generell auf die Verwendung von Kollagenhydrolysat als Kochsalzersatz in Nahrungsmitteln.

in praktisch allen von Menschen genossenen Nahrungsmitteln ist Kochsalz (Natriumchlorid) ein wesentlicher Bestandteil, der, abgesehen von seiner ernährungsphysiologischen Bedeutung, insbesondere auch für den als angenehm empfundenen Geschmack des betreffenden Nahrungsmittels verantwortlich ist. Es ist bekanntlich nicht möglich, die in einem Nahrungsmittel bestimmten Geschmackes enthaltene Kochsalzmenge über ein bestimmtes Maß hinaus zu reduzieren, ohne daß hierdurch der spezifische Geschmack verlorengeht und das Nahrungsmittel als geschmacklos abgelehnt wird.

In einer üblichen menschlichen Tageskost sind etwa 3 bis 5 g Kochsalz enthalten. Diese Menge ist zur Aufrechterhaltung der Gesundheit und der physiologischen Tätigkeiten des menschlichen Körpers ausreichend. Häufig beträgt, je nach Eßgewohnheit, die Kochsalzzufuhr jedoch über 10 g pro Tag.

Es ist andererseits bekannt, daß eine übermäßige Kochsalzzufuhr im Weg über die Nahrungsmittel zu äußerst schädlichen Auswirkungen auf den menschlichen Kreislauf führen kann, nämlich insbesondere zu Bluthochdruck und Nierenerkrankungen. Es besteht daher eine dringende Notwendigkeit, die Kochsalzaufnahme des Menschen zu reduzieren, und zwar nicht nur um bestehende Krankheiten durch eine kochsalzarme Diät zu heilen, sondern auch als vorbeugende Maßnahme bei gesunden Menschen.

Es liegen zahlreiche Versuche vor, eine schmackhafte, kochsalzarme Diät zusammenzustellen, die zumeist auf der Zugabe von Kräutern und Naturgewürzen anstelle von Kochsalz beruhen. Diese Versuche sind alle mit dem Mangel behaftet, daß es praktisch unmöglich ist, einen erheblichen Anteil des Kochsalzes durch andere Stoffe zu ersetzen, ohne daß dabei der typische, vom Menschen als angenehm empfundene, an das Kochsalz gebundene Geschmack verlorengeht.

Es ist Aufgabe der Erfindung, eine salzarme menschliche Kost anzugeben, deren Geschmack trotz Reduzierung des Kochsalzgehaltes nicht beeinträchtigt und von einer Kost mit entsprechendem vollen Kochsalzgehalt im wesentlichen nicht unterscheidbar ist.

Zur Lösung dieser Aufgabe wurde gefunden, daß es möglich ist, beträchtliche Mengen des in einem Nahrungsmittel enthaltenen Kochsalzes durch Kollagenhydrolysat zu ersetzen. Überraschenderweise erleidet hierdurch die an Kochsalz gebundene Geschmackskomponente praktisch keine Einbuße selbst dann, wenn bis zu 50 % des Kochsalzes durch Kollagenhydrolysat (bis zu 10 Gew.%, bezogen auf das Nahrungsmittelgewicht) ersetzt werden.

Eine volle physiologische Erklärung der Tatsache, daß die Ersetzung eines wesentlichen Teiles des Kochsalzgehaltes in einem Nahrungsmittel durch Kollagenhydrolysat praktisch zu keiner Geschmackseinbuße des Nahrungsmittels führt, ist nicht möglich. Es wird derzeit jedoch angenommen, daß der geschilderte Effekt auf der Anwesenheit bestimmter Aminosäuren im Kollagenhydrolysat beruht und diese für die Geschmackskonservierung des Nahrungsmittels verantwortlich sind.

Im einzelnen besteht ein erfindungsgemäßes Verfahren zur Reduzierung der Kochsalzmenge in einem Nahrungsmittel darin, daß man 20 bis 50 Gew.% der Kochsalzmenge durch Zugabe von bis zu 10 %, bevorzugt 1-4 %, besonders bevorzugt 2 %, bezogen auf das Gewicht des Nahrungsmittels, an Kollagenhydrolysat mit einem Mollekulargewicht kleiner als 50 000 Dalton ersetzt.

Ein erfindungsgemäßes Nahrungsmittel mit einem Gehalt an Kochsalz und hierdurch bestimmtem Geschmackseindruck zeichnet sich dadurch aus, daß der Kochsalzgehalt ohne Geschmackseinbuße durch Zusatz von bis zu 10 %, bezogen auf das Nahrungsmittelgewicht, an Kollagenhydrolysat mit einem Molekulargewicht kleiner als 50 000 Dalton und 10 bis 50 Gew.% verringert ist.

Generell besteht die Erfindung auch in der Verwendung von Kollagenhydrolysat als Kochsalzersatz in Nahrungsmitteln, wobei bis zu 50 Gew.% des geschmacksbestimmenden Kochsalzes im Nahrungsmittel ohne wesentliche Geschmacksveränderung durch bis zu 10 %, bezogen auf das Nahrungsmittelgewicht, an Kollagenhydrolysat mit einem Molekulargewicht kleiner als 50 000 Dalton ersetzt werden.

Die nachstehende Beschreibung dient im Zusammenhang mit einigen Beispielen der weiteren Erläuterung der Erfindung.

Kollagenhydrolysate von Lebensmittelqualität lassen sich, ähnlich wie Gelatine, in großen Mengen verhältnismäßig preiswert herstellen. Sie werden aus tierischem Bindegewebe, z.B. Haut, Knochen oder Sehnen,gewonnen. Die Hydrolyse kann unter Druck, durch Säure- oder Laugeneinwirkung oder durch Enzyme in an sich bekannter Weise erfolgen. Für den erfindungsgemäßen Einsatz sind enzymatisch hergestellte Kollagenhydrolysate besonders geeignet. Als Ausgangsmaterial für das erfindungsgemäß verwendete Kollagenhydrolysat eignet sich Kalbshaut besonders gut, obwohl auch Rinderhaut, tierische Knochen, tierische Sehnen sowie tierisches Bindegewebe mit Vorteil eingesetzt werden können. Die besten Ergebnisse lassen sich mit Kollagenhydrolysaten erzielen, die eine mittlere Molekulargewichtsverteilung von unter 50 000 Dalton haben. Besonders effektvoll ist die Verwendung eines Kollagenhydrolysates mit einer mittleren Molekulargewichtsverteilung zwischen 2000 und 50 000 Dalton, wobei besonders gute Ergebnisse mit Werten von etwa 15 000 Dalton erzielt werden.

Es wurde gefunden, daß bei der Herstellung von Lebensmitteln der Kochsalzgehalt um 10 bis 50 Gew.% ohne Einbuße an Geschmack und an Aroma reduziert werden kann, wenn bis zu 10 %, bezogen auf das Nahrungsmittelgewicht, an Kollagenhydrolysat zugegeben werden. Andere Eiweißhydrolysate, z.B. auf der Basis von Milcheiweiß oder Sojaprotein, zeigen diese Wirkung nicht. Man kann also annehmen, daß aufgrund des auf dem Einsatz von Kollagenhydrolysaten beruhenden Effektes eine Verringerung des Natriumchloridgehaltes von 40 bis 50 % in bestimmten Lebensmitteln erreichbar ist. In anderen Lebensmitteln kann es ausreichend sein, eine Reduzierung des Kochsalzgehaltes zwischen 10 und 30, insbesondere 10 und 20 Gew.% zu erzielen.

Der Erfindungsvorschlag läßt sich auf einen weiten Bereich von Nahrungsmitteln anwenden. Insbesondere eignen sich Fleischerzeugnisse, Fertiggerichte, Backwaren, z.B. Brot, und Lebensmittelkonserven.

Nachstehend werden einige Beispiele für Lebensmittel angegeben, in denen der an sich erforderliche, geschmacksbestimmende Kochsalzgehalt durch Kollagenhydrolysat ersetzt ist.

Beispiel I

Feine Leberstreichwurst wird aus folgenden Bestandteilen hergestellt (Angaben in Gew.%):
15 % Schweineleber, roh vorzerkleinert;
55 % gewachsener und gebrühter Schweinebauch;
20 % gewachsenes, gebrühtes Schweinefleisch und
10 % Kochbrühe
Dieser Masse werden an Gewürzen und Zutaten pro kg zugegeben:
18 g Kochsalz (Nitritpökelsalz);
5 g Gewürzmischung;
15 g gedünstete Zwiebel.

In mehreren Versuchen wurde die angegebene Kochsalzmenge (18 g/kg Wurstmasse) reduziert und durch Zugabe bestimmter Mengen an Kollagenhydrolysat ersetzt. Die so hergestellten Wurstproben wurden ohne Bekanntgabe ihrer Zusammensetzung einem Kreis von 100 Personen dargeboten, die ihr Geschmacksurteil über jede Probe abzugeben hatten. Es ergab sich, daß Proben, die 16 g Kochsalz und 20 g Kollagenhydrolysat enthielten, als besonders gut bezeichnet wurden. Proben mit nur 14 g Kochsalz und 30 g Kollagenhydrolysat wurden im Geschmack von Wurstproben mit 18 g Kochsalz und ohne Kollagenhydrolysatzugabe nicht unterschieden.

Die genannten Angaben in g bedeuten eine Kochsalzverringerung von 12 bzw. 30 Gewichtsprozent bei einem Zusatz an Kollagenhydrolysat von 2 bzw. 3 %, bezogen auf das Nahrungsmittelgewicht.

Beispiel II

Als Fertiggericht (Konservenware) wurde Ragout fin á la Champignon hergestellt. Die Bestandteile waren (Angaben in Gew.%):
35 % Kalbfleisch, mager, entsehnt, gebrüht,
10 % Champignon, kleine ganze Köpfe;
55 % weiße Soße, bestehend aus:
88 % Kalbfleischsud;
8 % Zutaten (Mehl, Margarine, Zwiebeln, Sahne);
2 % Gewürze und
2 % Kochsalz.
Folgende Versuche wurden durchgeführt:
1. (Kontrollversuch)
2 % Kochsalz ohne Kollagenhydrolysat
2. 1,6 % Kochsalz,
2 % Kollagenhydrolysat
(20 % Kochsalzreduzierung)
3. 1,3 % Kochsalz,
3 % Kollagenhydrolysat
(30 % Kochsalzreduzierung)
4. 1 % Kochsalz
5 % Kollagenhydrolysat
(50 % Kochsalzreduzierung)
Von den Testpersonen wurde Geschmack und Aroma der Proben gemäß den obigen Versuchen allgemein als gut und abgerundet bezeichnet.

Außerdem ergab sich, daß die Stabilität der Soßenbindung bei Einsatz von Kollagenhydrolysat besser als ohne diese Substanz ist.

**Patentansprüche**

1. Nahrungsmittel mit einem Gehalt an Kochsalz und hierdurch bestimmtem Geschmackseindruck, dadurch gekennzeichnet, daß der Kochsalzgehalt ohne Geschmackseinbuße durch Zusatz von bis zu 10 %, bezogen auf das Nahrungsmittelgewicht, an Kollagenhydrolysat mit einem Molekulargewicht kleiner als 50 000 Dalton um 10 bis 50 Gew.% verringert ist.

2. Nahrungsmittel nach Anspruch 1, dadurch gekennzeichnet, daß es zwischen 1 und 4 Gew.%

an Kollagenhydrolysat enthält.

3. Nahrungsmittel nach Anspruch 1 oder 2, dadurch gekennzeichnet, daß es etwa 2 Gew.% an Kollagenhydrolysat enthält.

4. Nahrungsmittel nach Anspruch 1, 2 oder 3, dadurch gekennzeichnet, daß das Kollagenhydrolysat eine Molekulargewichtsverteilung zwischen 2000 und 50 000 Dalton hat.

5. Nahrungsmittel nach einem der Ansprüche 1 bis 4, dadurch gekennzeichnet, daß der Kochsalzgehalt um 30 bis 50 Gew.% verringert ist.

6. Nahrungsmittel nach einem der voranstehenden Ansprüche, dadurch gekennzeichnet, daß der Kochsalzgehalt um 10 bis 20 Gew.% verringert ist.

7. Verfahren zur Reduzierung der Kochsalzmenge in einem Nahrungsmittel, ohne dessen spezifischen Geschmack wesentlich zu ändern, dadurch gekennzeichnet, daß man 10 bis 50 Gew.% der Kochsalzmenge durch Zugabe von bis zu 10 %, bezogen auf das Gewicht des Nahrungsmittels, an Kollagenhydrolysat mit einem Molekulargewicht kleiner als 50 000 Dalton ersetzt.

8. Verwendung von Kollagenhydrolysat mit einem Molekulargewicht kleiner als 50 000 Dalton als Kochsalzersatz in Nahrungsmitteln, wobei bis zu 50 Gew.% des geschmacksbestimmenden Kochsalzes ohne wesentliche Geschmacksveränderung durch bis zu 10 %, bezogen auf das Nahrungsmittelgewicht, an Kollagenhydrolysat ersetzt werden.

## Claims

1. A foodstuff having a content of cooking salt and a taste impression determined thereby, characterized in that without loss of taste the cooking salt content is reduced by 10% to 50% by weight by the addition of up to 10%, referred to the weight of the foodstuff, of collagen hydrolysate having a molecular weight lower than 50 000 Dalton.

2. A foodstuff according to claim 1, characterized in that it contains between 1 and 4% by weight of collagen hydrolysate.

3. A foodstuff according to claims 1 or 2, characterized in that it contains about 2% by weight of collagen hydrolysate.

4. A foodstuff according to claims 1, 2 or 3, characterized in that the collagen hydrolysate has a molecular weight distribution of between 2000 and 50 000 Dalton.

5. A foodstuff according to one of claims 1 to 4, characterized in that the cooking salt content is reduced by 30 to 50% by weight.

6. A foodstuff according to one of the preceding claims, characterized in that the cooking salt content is reduced by 10 to 20% by weight.

7. A process for reducing the quantity of cooking salt in a foodstuff without substantially altering its specific taste, characterized in that 10 to 50% by weight of the quantity of cooking salt is replaced by the addition of up to 10% by weight, referred to the weight of the foodstuff, of collagen hydrolysate having a molecular weight lower than 50 000 Dalton.

8. Use of collagen hydrolysate having a molecular weight lower than 50 000 Dalton as a substitute for cooking salt in foodstuffs, wherein up to 50% by weight of the taste-determining cooking salt is replaced without substantial change of taste by up to 10%, referred to the weight of the foodstuff, of collagen hydrolysate.

## Revendications

1. Produit alimentaire ayant une teneur en sel de cuisine et une sensation gustative déterminée par celle-ci, caractérisé en ce que la teneur en sel de cuisine est réduite de 10 à 50 % en poids, sans altération de saveur, par l'addition jusqu'à 10 %, rapporté au poids du produit alimentaire, d'un hydrolysat de collagène à masse moléculaire inférieure à 50 000 dalton.

2. Produit alimentaire selon la revendication 1, caractérisé en ce qu'il contient entre 1 et 4 % en poids d'hydrolysat de collagène.

3. Produit alimentaire selon la revendication 1 ou 2, caractérisé en ce qu'il contient environ 2 % en poids d'hydrolysat de collagène.

4. Produit alimentaire selon la revendication 1, 2 ou 3, caractérisé en ce que l'hydrolysat de collagène à une répartition de masse moléculaire comprise entre 2 000 et 50 000 dalton.

5. Produit alimentaire selon l'une des revendications 1 à 4, caractérisé en ce que la teneur en sel de cuisine est réduite de 30 à 50 % en poids.

6. Produit alimentaire selon l'une des revendications précédentes, caractérisé en ce que la teneur en sel de cuisine est réduite de 10 à 20 % en poids.

7. Procédé pour réduire la quantité de sel de cuisine dans un produit alimentaire, sans en modifier essentiellement la saveur spécifique, caractérisé en ce qu'on remplace 10 à 50 % en poids de la quantité de sel de cuisine, par addition jusqu'à 10 %, rapporté au poids de la denrée alimentaire, d'un hydrolysat de collagène ayant une masse moléculaire inférieure à 50 000 dalton.

8. Utilisation d'un hydrolysat de collagène à masse moléculaire inférieure à 50 000 dalton, en guise de succédané du sel de cuisine dans des produits alimentaires, par laquelle jusqu'à 50 % en poids du sel de cuisine qui détermine la saveur est remplacé, sans altération essentielle de la saveur, par jusqu'à 10 %, rapporté au poids du produit alimentaire, d'un hydrolysat de collagène.